Europäisches Patentamt

European Patent Office

Office européen des brevets

(11) Veröffentlichungsnummer: **0 365 042**
**A1**

## EUROPÄISCHE PATENTANMELDUNG

(21) Anmeldenummer: **89120855.5**

(22) Anmeldetag: **15.03.88**

(51) Int. Cl.⁵: **G01M 3/20**

(30) Priorität: **31.03.87 EP 87104737**

(43) Veröffentlichungstag der Anmeldung:
**25.04.90 Patentblatt 90/17**

(60) Veröffentlichungsnummer der früheren
Anmeldung nach Art. 76 EPÜ: **0 285 864**

(84) Benannte Vertragsstaaten:
**CH DE FR GB IT LI**

(71) Anmelder: **LEYBOLD AKTIENGESELLSCHAFT**
**Bonner Strasse 498**
**D-5000 Köln 51(DE)**

(72) Erfinder: **Voss, Günter, Dr.**
**Werschbergstrasse 60**
**D-5203 Much(DE)**

(74) Vertreter: **Leineweber, Jürgen, Dipl.-Phys.**
**Nagelschmiedshütte 8**
**D-5000 Köln 40(DE)**

(54) Verfahren zur Lecküberwachung von fluidführenden Leitungssystemen bei
Gefriertrocknungseinrichtungen und für die Durchführung dieses Verfahrens geeignete
Gefriertrocknungseinrichtung.

(57) Die Einrichtung bezieht sich auf ein Verfahren
zur Lecküberwachung von fluidführenden Leitungssystemen bei Gefriertrocknungseinrichtungen; um
diese Lecküberwachung mit hoher Empfindlichkeit,
mit relativ einfachen Mitteln und kontinuierlich durchführen zu können, wird vorgeschlagen, daß ein Testgas in das Kühl-und/oder Heizmedium des Leitungssystems eingebracht wird und daß der Austritt von
Testgas aus einem innerhalb der Gefriertrocknungskammer (10, 42) gelegenen Leck des fluidführenden
Leitungssystemes mit Hilfe eines an die Gefriertrocknungskammer angeschlossenen testgasempfindlichen Detektors (11) überwacht wird; eine andere
Lösung besteht darin, daß ein Testgas-, vorzugsweise Heliumreservoir (6), zumindest zeitweise an das
Leitungssystem angeschlossen wird und daß die auf
Lecks zu untersuchenden Bereiche des Systems in
einer Kammer (10, 42) angeordnet werden, an der
testgasempfindliche Detektor (11) angeschlossen
wird.

FIG. 4

Verfahren zur Lecküberwachung von fluidführenden Leitungssystemen bei Gefriertrocknungseinrichtungen und für die Durchführung dieses Verfahrens geeignete Gefriertrocknungseinrichtung

Gefriertrocknungseinrichtungen weisen üblicherweise eine Kammer mit Stellplatten auf, welche die Behälter mit dem zu lyophilisierenden Produkt tragen. Diese Stellplatten sind heizbar, da dem zu gefriertrocknenden Produkt zur Beschleunigung des Trocknungsvorganges Wärme zugeführt werden muß. Häufig sind die Stellplatten auch noch kühlbar, so daß das vor der Gefriertrocknung notwendige Einfrieren des Produktes ebenfalls in der Kammer vorgenommen werden kann. Das Kühlen und/oder Heizen der Stellplatten kann mit Hilfe von Flüssigkeiten (Solen, Laugen, Silikonöl o. dgl.) oder Dämpfen vorgesehen werden. Zu diesem Zweck weisen die Stellplatten Durchströmkanäle auf oder sie sind doppelwandig ausgebildet. Über an die Stellplatten angeschlossene und durch die Wandung der Gefriertrocknungskammer hindurchgeführte Leitungen werden die Stellplatten mit dem Kühl- und/oder Heizmedium versorgt.

Die Gefriertrocknung wird unter Vakuum durchgeführt. An die Gefriertrocknungskammer sind deshalb Einrichtungen zur Vakuumerzeugung und zur Abführung des während der Trocknung entstehenden Dampfes angeschlossen. In der Regel ist an die Gefriertrocknungskammer eine weitere Kammer angeschlossen, in der sich ein Kondensator befindet. An diese Kondensator-Kammer ist eine Vakuumpumpe angeschlossen.

Gefriertrocknungsverfahren werden bevorzugt bei der Herstellung von Arzneimitteln eingesetzt. Der Wert einer Charge ist häufig sehr hoch (mehrere Mio-DM). Von besonderer Bedeutung ist deshalb der Schutz der Charge vor Kontaminationen, die u. a. durch Lecks in den Leitungssystemen für das Heiz- und/oder Kühlmedium verursacht werden können.

Aus der DE-OS 32 30 146 ist es bekannt, geschlossene Rohrleitungssysteme dadurch auf Dichtigkeit zu prüfen, daß in das geschlossene System ein Druckmedium eingepreßt wird, daß der Druck über eine längere Zeitdauer hinweg aufrechterhalten wird und daß dabei mittels eines Meßinstrumentes der Druck überwacht wird. Wenn kein Druckabfall stattfindet, bedeutet dies, daß die geprüfte Anlage dicht ist.

Eine Lecksuche dieser Art ist relativ grob. Außerdem sind die in dieser Weise zu überwachenden Anlagen so auszulegen, daß sie einem relativ hohen Prüfdruck standhalten. Schließlich ist eine kontinuierliche Lecküberwachung des in Betrieb befindlichen Rohrsystems, was eine ständige Aufrechterhaltung des Prüfdruckes erfordern würde, nicht möglich.

Der vorliegenden Erfindung liegt die Aufgabe zugrunde, ein Verfahren zur Lecküberwachung von fluidführenden Leitungssystemen bei Gefriertrocknungseinrichtungen vorzuschlagen, das hochempfindlich ist und in einfacher Weise kontinuierlich durchgeführt werden kann.

Erfindungsgemäß wird diese Aufgabe dadurch gelöst, daß ein Testgas in das Kühl- und/oder Heizmedium eingebracht wird und daß der Austritt von Testgas aus einem innerhalb der Gefriertrocknungskammer gelegenen Leck des fluidführenden Leitungssystemes mit Hilfe eines an die Gefriertrocknungskammer angeschlossenen testgasempfindlichen Detektors überwacht wird.

Eine weitere Möglichkeit zur Lösung der gestellten Aufgabe besteht darin, daß während des Einfrierens und/oder während der Gefriertrocknung innerhalb der Gefriertrocknungskammer eine Testgasatmosphäre aufrechterhalten wird und daß gegebenenfalls durch ein Leck des innerhalb der Gefriertrocknungskammer gelegenen Leitungssystems in das Heiz- und/oder Kühlmedium eindringendes Testgas dadurch überwacht wird, daß an das Leitungssystem ein testgasempfindlicher Detektor angeschlossen ist.

Beide Verfahren erlauben es, die für die Produktsicherheit relevanten Bereiche der Leitungssysteme ständig in relativ einfacher Weise auf Lecks zu überwachen. Insbesondere bei der Verwendung von Helium als Testgas ist diese Lecksuche hochempfindlich. Das Helium dringt durch Lecks, durch die die Flüssigkeiten oder Dämpfe der Leitungssysteme infolge ihrer Oberflächenspannung noch nicht auszutreten vermögen. Die erfindungsgemäßen Verfahren erlauben es deshalb, gegebenenfalls vorhandene oder entstehende Lecks so früh festzustellen, bevor die Fluide austreten und Kontaminationen verursachen.

Weitere Vorteile und Einzelheiten der Erfindung sollen anhand der Figuren 1 bis 4 erläutert werden. Es zeigen:

- Figur 1 ein Rohrsystem, bei dem an das Rohrsystem ein Testgasreservoir angeschlossen ist und der Austritt des Testgases aus einem eventuell vorhandenen Leck registriert wird,

- Figur 2 ein Rohrsystem, bei dem ein Testgasdetektor an das Leitungssystem angeschlossen ist und der Eintritt des Testgases in ein eventuell vorhandenes Leck registriert wird,

- Figur 3 ein Ausführungsbeispiel für einen Membranseparator und

- Figur 4 eine Gefriertrocknungsanlage, bei der von der Erfindung Gebrauch gemacht wird.

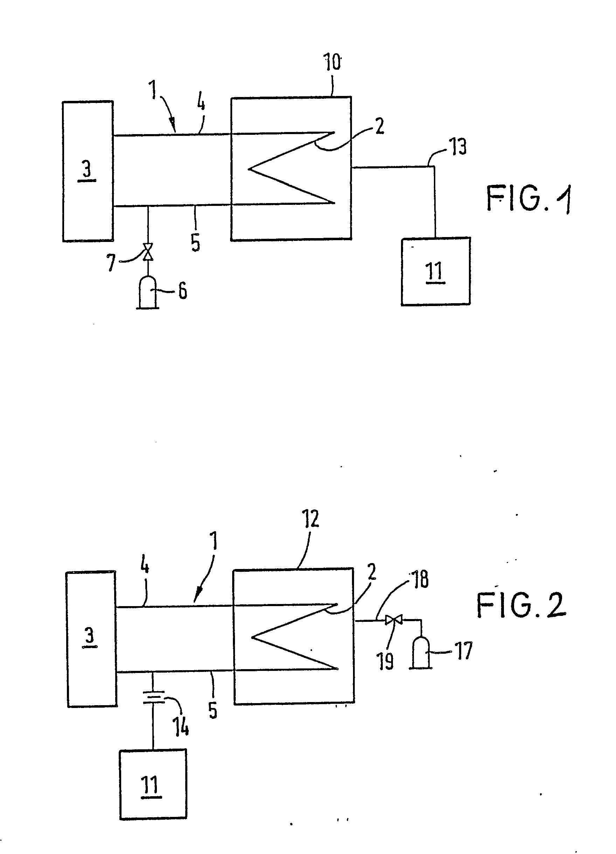

Das in den Figuren 1 und 2 schematisch dargestellte, eine Flüssigkeit oder Dampf im Kreislauf führende Rohrsystem 1 umfaßt eine Rohrschlange 2, eine Versorgungseinrichtung 3 (zum Beispiel eine Kältemaschine bei einem Kühlkreislauf) und die Verbindungsleitungen 4 und 5. Die Figuren 1 und 2 sollen nur der Erläuterung des Erfindungsprinzips dienen. Die Rohrschlange 2 entspricht beispielsweise dem innerhalb der Kammer einer Gefriertrocknungseinrichtung liegenden Leitungssystem.

Bei der Ausführung nach Figur 1 ist an eine der Verbindungsleitungen 4, 5 ein Testgasreservoir (Druckgasflasche 6) über das Ventil 7 angeschlossen. Bei geöffnetem Ventil 7 geht Testgas, vorzugsweise Helium, in das Fluid des Rohrsystems 1 in Lösung. Weist das Leitungssystem 1 ein Leck uf, dann tritt Helium aus, selbst wenn das Leck so klein ist, daß wegen der Oberflächenspannung die Flüssigkeit oder der Dampf selbst nicht austritt. Der interessierende Bereich des Rohrleitungssystems 1, in diesem Fall Rohrschlange 2, ist innerhalb eines abgeschlossenen Raumes, der Kammer 10, angeordnet. An diese Kammer 10 ist ein testgasspezifischer Detektor 11 beziehungsweise ein Lecksuchgerät über die Leitung 13 angeschlossen. Bei einem in dieser Weise ausgestatteten Rohrleitungssystem ist eine kontinuierliche Überwachung der Rohrschlange 2 auf Lecks möglich.

Bei Helium als Testgas ist der Detektor 11 zweckmäßigerweise als Massenspektrometer ausgebildet. Der Testgasdetektor 11 ist lediglich als Block dargestellt worden. Zweckmäßigerweise ist er Bestandteil eines Lecksuchgerätes, das weitere Versorgungseinrichtungen (Vakuumpumpe, Kühlfalle, Ventile und dergleichen) enthält.

Das Ventil 7, über das die Druckgasflasche 6 an das Rohrsystem 1 angeschlossen ist, ist zweckmäßigerweise als Druckminderventil ausgebildet. Zum einen ergibt sich dadurch die Möglichkeit, daß das Rohrsystem 1 nicht mit dem vollen Druck der Flasche 6 beaufschlagt werden muß; zum anderen besteht die Möglichkeit, mit Hilfe entsprechender Druckmeßgeräte das Vorhandensein von Testgas im Reservoir 6 zu überwachen. Im übrigen ist es nicht erforderlich, daß bei einer Dauerüberwachung das Ventil 7 ständig offengehalten werden muß. Wesentlich ist, daß eine ausreichende Menge Testgas im Fluid des Rohrsystems gelöst ist. Solange das Rohrsystem dicht ist, verbleibt das gelöste Testgas in diesem Fluid.

Beim Ausführungsbeispiel nach Figur 2 ist der testgasspezifische Detektor beziehungsweise das Lecksuchgerät 11 über einen Membranseparator 14 an das Rohrsystem 11 angeschlossen. Anders al beim Ausführungsbeispiel nach Figur 1 wird nicht der Austritt von Testgas durch ein gegebenenfalls vorhandenes Leck, sondern der Eintritt von Testgas durch das Leck in das Fluid beobachtet. Dazu werden die auf Lecks zu untersuchenden Bereiche des Rohrleitungssystems 1 mit Testgas umspült. Da der interessierende Bereich, hier die Rohrschlange 2, innerhalb eines abgeschlossenen Raumes, der Kammer 12, angeordnet ist, kann über die Leitung 18 mit dem Ventil 19 Testgas in die Kammer 12 eingelassen werden.

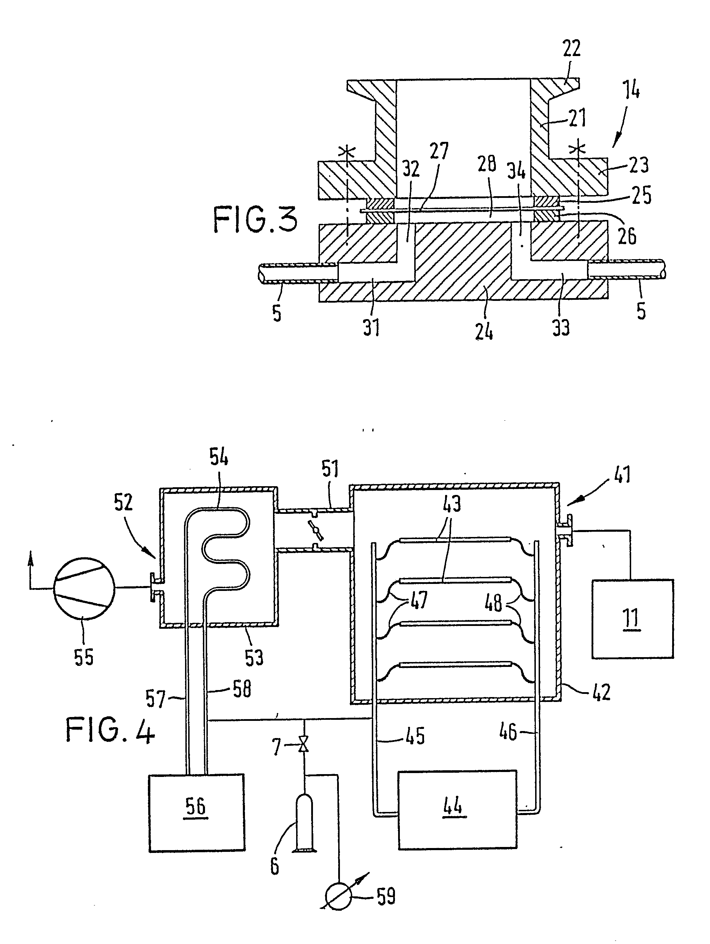

Figur 3 zeigt ein Ausführungsbeispiel für einen Membranseparator 14, über den der testgasspezifische Detektor 11 bei der Ausführung nach Figur 2 an das Rohrsystem 1 angeschlossen ist. Er besteht aus einem Leitungsabschnitt 21, der stirnseitig mit Flanschen 22 und 23 ausgerüstet ist. An den Flansch 22 wird der testgasspezifische Detektor 11 angeschlossen.

Mit 24 ist ein Leitungselement bezeichnet, das zum Beispiel in die Leitung 5 des Rohrsystems eingeschaltet ist. Auf einer Stirnseite dieses Leitungselementes 24 ist der Leitungsabschnitt 21 mit seinem Flansch 23 aufgeschraubt. Zwischen dem Flansch 23 und dem Leitungselement 24 sind zwei Ringe 25 und 26 angeordnet, die vorzugsweise aud Kupfer bestehen und zwischen sich eine Membran 27 einspannen. Dadurch entsteht zwischen der Stirnseite des Elementes 24 und der Membran 27 ein Raum 28. Die in dem Leitungselement 24 endenden Abschnitte der Rohrleitung 5 setzen sich in Bohrungen 31, 32 beziehungsweise 33, 34 fort, welche jeweils in den Raum 28 münden. Dadurch wird das durch die Leitung 5 strömende Fluid durch den Raum 28 etwa parallel zur Membran 27 geführt.

Die Membran 27 ist für das gewählte Testgas durchlässig, für das in der Rohrleitung 5 strömende Fluid jedoch praktisch nicht. Bei Helium als Testgas wird zweckmäßigerweise eine etwa 1/10 mm starke Folie aus F.E.P.-Tetrafluorkohlenstoff als Membran gewählt. Gegebenenfalls in der durch die Rohrleitung 5 strömenden Flüssigkeit gelöstes Helium kann durch die Membran 27 hindurchtreten und wird vom angeschlossenen Testgasdetektor oder Lecksucher registriert, ohne daß dieses Gerät durch die Flüssigkeit gefährdet ist.

Figur 4 zeigt eine Einrichtung zur Gefriertrocknung, bei der die eine Alternative der Erfindung angewendet wird. Die Gefriertrocknungseinrichtung 41 besteht aus der Kammer 42 mit den Stellplatten 43 für die Behälter mit dem zu lyophilisierenden Produkt. Die Stellplatten 43 von Gefriertrocknungseinrichtungen dieser Art sind üblicheweise heizbar, da dem zu lyophilisierenden Produkt zur Beschleunigung des Vorganges Wärme zugeführt werden muß. Häufig sind die Stellplatten 43 auch noch kühlbar, so daß das vor der Gefriertrocknung notwendige Einfrieren des Produktes ebenfalls innerhalb der Kammer 42 vorgesehen werden kann.

Die Temperierung der Stellplatten 43, die selbst doppelwandig ausgebildet sind, erfolgt mit Hilfe der Wärme-/ Kälteversorgungseinrichtung 44.

Von dieser Versorgungseinrichtung 44 aus führen zwei Leitungen 45 und 46 in die Gefriertrocknungskammer 42 hinein. Die Stellplatten 43 selbst sind parallel zueinander über flexible Leitungen 47 und 48 an die Leitungen 45 und 46 angeschlossen, so daß ein dem Wärmetransport dienendes Fluid (ein Silikonöl oder eine Sole) das aus Stellplatten 43, Versorgungseinrichtung 44 und Leitungen 45, 46 bestehende Rohrleitungssystem im Kreislauf durchströmt.

An die Gefriertrocknungskammer 42 ist über die Rohrleitung 51 eine Evakuierungseinrichtung 52 angeschlossen. Diese umfaßt das in der Kammer 53 befindliche, gekühlte Rohrschlangensytem 54 sowie die an die Kammer 53 angeschlossene Vakuumpumpe 55. Zur Versorgung der Rohrschlange 54 in der Kondensatorkammer 53 dient die Kältemaschine 56, die über die Leitungen 57 und 58 mit der Rohrschlange 54 verbunden ist.

Um eine ständige Dichtheitskontrolle insbesondere derjenigen Bereiche der Fluidsysteme zu ermöglichen, von denen aus bei einem Leck Kontaminationen ausgehen könnten, sind folgende Maßnahmen getroffen: Die Leitungen 45 und 58 sind - wie bei Ausführungsbeispiel nach Figur 1 über das Ventil 7 an ein Testgas-Reservoir 6, vorzugsweise einem unter Druck stehenden, Helium enthaltenden Behälter angeschlossen. Zur Kontrolle des Vorrates an Testgas ist noch das Druckmeßinstrumtent 59 vorgesehen. Dieser Anschluß des Testgasreservoirs ermöglicht es, daß sich Helium in den in den Leitungssystemen befindlichen Fluide löst. An die Gefriertrocknungskammer 42 ist weiterhin der testgasempfindliche Detektor 11 angeschlossen. Tritt in den kritischen Bereichen der Leitungssysteme, das heißt innerhalb der Kammer 42 beziehungsweise innterhalb des Kondensators 53, ein Leck auf, dann tritt Helium aus und gelangt in den testgasspezifischen Detektor 11.

Es besteht - wie es anhand des Ausführungsbeispieles nach Figur 2 beschrieben wurde - auch die Möglichkeit, den Testgasdetektor 11 über Membranseparatoren 14 an die Leitungssysteme des Gefriertrockners und des Kondensator anzuschließen. Voraussetzung ist dann, daß der Gefriertrocknungsprozeß unter Testgasatmosphäre durchgeführt wird.

Der wesentliche Vorteil der Erfindung liegt darin, daß eine empfindliche Heliumlecksuche, falls gewünscht on-line, an den gefüllten Fluidsystemen von Gefriertrocknungsanlagen durchführbar ist. Geht man davon aus, daß die in der Flüssigkeit gelöste Heliummenge groß ist gegen den Durchsatz von Helium durch den Membranseparator 14, dann kann die gelöste Helium-Konzentration in einem Fast-Gleichgewicht bestimmt werden. Wesentlich ist, daß die Membran 27 ständig überströmt ist, damit keine Testgas- bzw. Heliumverarmung auftritt. Aus den physikalischen Eigenschaften der Flüssigkeit (Löslichkeit, Temperatur und dgl.) sowie der Membran 27 läßt sich die Größe von Lecks errechnen.

Je nachdem, nach welchem Verfahren die Lecküberwachung durchgeführt wird, kann eine Empfindlichkeit erreicht werden, die bei $10^{-9}$ mbar l/s liegt. Entscheidend ist dabei die Konzentration, mit der Helium in dem jeweiligen Fluid vorliegt. Die größte Empfindlichkeit kann mit dem Verfahren erzielt werden, bei dem an das Flüssigkeitssystem ein Heliumreservoir angeschlossen ist, so daß Helium in dieser Flüssigkeit bis zur Sättigung gelöst ist. Durch Lecks der angegebenen Größenordnung können Flüssigkeiten in der Regel noch nicht austreten, so daß Lecks in Flüssigkeitssystemen erkannt werden können, bevor die Flüssigkeit selbst austritt.

Die Möglichkeit, während des Betriebs von Gefriertrocknungseinrichtungen eine Dauerlecksuche zu betreiben, spart Wartungszeit, erhöht die Verfügbarkeit der Systeme und kann im Störfall Zeit und Kosten sparen. Einige Leckagen (zum Beispiel Kaltlecks, Lecks unter Druckbedingungen) sind in "trockenem" Zustand der Apparatur nach konventionellen Methoden häufig nicht erkennbar. Durch die erfindungsgemäßen Verfahren werden derartige Lecks jetzt sogar während des Betriebs feststellbar, ohne daß eine Produktgefährdung zu befürchten ist.

**Ansprüche**

1. Verfahren zur Lecküberwachung von fluidführenden Leitungssytemen bei Gefriertrocknungseinrichtungen, dadurch gekennzeichnet, daß ein Testgas in das Kühl- und/oder Heizmedium des Leitungssystems eingebracht wird und daß der Austritt von Testgas aus einem innerhalb der Gefriertrocknungskammer (10, 42) gelegenen Leck des fluidführenden Leitungssystemes mit Hilfe eines an die Gefriertrocknungskammer angeschlossenen testgasempfindlichen Detektors (11) überwacht wird.

2. Verfahren nach Anspruch 1, dadurch gekennzeichnet, daß ein Testgas-, vorzugsweise Heliumreservoir (6), zumindest zeitweise an das Leitungssystem angeschlossen wird und daß die auf Lecks zu untersuchenden Bereiche des Systems in einer Kammer (10, 42) angeordnet werden, an die der testgasempfindliche Detektor (11) angeschlossen wird.

3. Verfahren zur Lecküberwachung von fluidführenden Leitungssystemen bei Gefriertrocknungseinrichtungen, dadurch gekennzeichnet, daß innerhalb der Gefriertrocknungskammer (12, 42) eine Testgasatmosphäre aufrechterhalten wird und daß gegebenenfalls durch ein Leck des innerhalb der Gefriertrocknungskammer gelegenen Leitungssystems in das Heiz-und/oder Kühlmedium eindringendes Testgas dadurch überwacht wird, daß an das Leitungssystem ein testgasempfindlicher Detektor (11) angeschlossen ist.

4. Verfahren nach Anspruch 3, dadurch gekennzeichnet, daß die auf Lecks zu prüfenden Bereiche des fluidführenden Systems von außen mit Helium beaufschlagt werden und daß gegebenenfalls durch ein Leck in das Fluid eindringendes Helium mit Hilfe eines Membranseparators (14) mit einer fluiddichten, testgasdurchlässigen Membran (27) abgetrennt und mit Hilfe eines testgasempfindlichen Detektors (11) nachgewiesen wird.

5. Gefriertrocknungseinrichtung zur Durchführung der Verfahren nach den Ansprüchen 1 oder 2 mit einer Gefriertrocknungskammer mit doppelwandigen Stellplatten und mit einem Leitungssystem zur Temperierung der Stellplatten, dadurch gekennzeichnet, daß das Leitungssystem außerhalb der Gefriertrocknungskammer (42) mit einem Testgasreservoir (6) verbunden ist und daß die Kammer (42) an einen testgasspezifischen Detektor (11) angeschlossen ist.

6. Gefriertrocknungseinrichtung nach Anspruch 5, dadurch gekennzeichnet, daß eine Kondensatorkammer (52) mit einem eine Kühlflüssigkeit führenden Leitungssystem (54) vorgesehen ist und daß dieses Leitungssystem ebenfalls mit dem Testgasreservoir (6) in Verbindung steht.

7. Einrichtung nach Anspruch 5 oder 6, dadurch gekennzeichnet, daß das Testgasreservoir (6) über ein Druckminderventil (7) an das Rohrsystem (58) angeschlossen ist.

8. Gefriertrocknungseinrichtung zur Durchführung der Verfahren nach den Ansprüchen 3 oder 4 mit einer Gefriertrocknungskammer und mit einem der Temperierung dienenden Leitungssystem, dadurch gekennzeichnet, daß außerhalb der Gefriertrocknungskammer (42) an das Leitungssystem ein testgasempfindlicher Detektor (11) angeschlossen ist und daß innerhalb der Gefriertrockungskammer (12, 42) eine Testgasatmosphäre aufrechterhalten wird.

9. Einrichtung nach Anspruch 8, dadurch gekennzeichnet, daß der Testgasdetektor (11) an das Fluidsystem über einen Membrangasseparator (14) mit einer testgasdurchlässigen Membran (27) angeschlossen ist.

10. Einrichtung nach Anspruch 9, dadurch gekennzeichnet, daß alle Leitungssysteme von Kondensator und Stellplatten) mit dem Testgasdetektor (11) verbunden sind.

11. Einrichtung nach einem der Ansprüche 5 bis 10, dadurch gekennzeichnet, daß der Testgasdetektor (11) ein Massenspektrometer ist.

12. Verfahren und Vorrichtung nach einem der vorhergehenden Ansprüche, gekennzeichnet durch die Verwendung von Helium als Testgas.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 524 607 (CH.A. PELLETIER et al.) * Ansprüche 1-18; Spalte 6, Zeilen 38-68; Spalte 7, Zeilen 1-20; Spalte 10, Zeilen 5-12,23-64 * --- | 1,2,10, 12 | G 01 M 3/20 |
| X | DE-A-1 835 616 (SIEMENS AG) * Seite 4 * --- | 5,11 | |
| A | FR-A-2 347 668 (WESTINGHOUSE ELECTRIC CORP.) * Ansprüche 1-3; Seite 3, Zeilen 35-37; Seite 4, Zeilen 1-3; Seite 8, Zeilen 1-24; Seite 9, Zeilen 32-37; Seite 11, Zeilen 24-33 * --- | 1,2,11, 12 | |
| A | US-A-4 409 817 (D. EDWARDS) * Figur 4; Spalte 6, Zeilen 52-68; Spalte 7, Zeilen 45-54 * --- | 3 | |
| A | EP-A-0 047 324 (NIHONSANSO KABUSHIKI KAISHA) * Ansprüche 1-9 * --- | 4 | RECHERCHIERTE SACHGEBIETE (Int. Cl.5) G 01 M 3 |
| A | FR-A-2 558 592 (SOCIETE MEDITERRANEENNE DE PLATIQUES AGRICOLES) * Seite 6, Zeilen 3-7 * ----- | 7 | |

Der vorliegende Recherchenbericht wurde für alle Patentansprüche erstellt

| Recherchenort | Abschlußdatum der Recherche | Prüfer |
|---|---|---|
| BERLIN | 28-12-1989 | DIETRICH A. |